# EUROPÄISCHE PATENTANMELDUNG

(11) **EP 0 701 125 A2**
(43) Veröffentlichungstag der Anmeldung: **13.03.1996**
(21) Anmeldenummer: 95112572.3
(22) Anmeldetag: 10.08.1995
(51) Int. Cl.: G01N 27/407

(54) **Sensor**

(30) Priorität: 16.08.1994 DE 4428954
(71) Anmelder: ABB Research Ltd., CH-8050 Zürich (CH)
(72) Erfinder: Baier, Gunar, D-68219 Mannheim (DE); Petri, Günter, D-69207 Sandhausen (DE); Puhane, Anton, D-69124 Heidelberg (DE); Vogel, Albrecht, D-76297 Stutensee (DE)
(74) Vertreter: Rupprecht, Klaus, Dipl.-Ing.

(57) **Zusammenfassung**

Die Erfindung bezieht sich auf einen Sensor (1) zur Ermittlung der in Abgasen aus Verbrennungsanlagen und Verbrennungsmotoren enthaltenen gasförmigen Bestandteile. Der Sensor (1) weist eine Meßvorrichtung (2) auf, die in einem metallischen Gehäuse (2) angeordnet ist. Das Gehäuse (3) dient als elektrisches Anschlußelement für eine Referenzelektrode (6), die im Inneren eines Festelektrolytrohres (4) der Meßvorrichtung (2) angeordnet ist. Die auf den Außenflächen des Festelektrolytrohres (4) angeordneten Meßelektroden (10 und 11) sind mit Leiterbahnen (12 und 13) verbunden, die durch das Innere des Festelektrolytrohres (4) geleitet und über Anschlußelemente (15 und 16) sowie über Leitungen (15L und 16L) aus dem Gehäuse (3) herausgeführt sind.

## Beschreibung

Die Erfindung bezieht sich auf einen Sensor zur Kontrolle von Abgasen aus Verbrennungsanlagen und Verbrennungsmotoren gemäß dem Oberbegriff des Patentanspruches 1.

Zur Energieeinsparung und Vermeidung von Umweltschäden ist eine Überwachung bzw. Regelung von Verbrennungsprozessen nötig. Die Messung des Sauerstoffgehalts in den Abgasen alleine kann kein Hinweis auf eine unvollständige Verbrennung liefern. Vielmehr ist es besonders wichtig, den Anteil der bei der unvollständigen Verbrennung auftretenden oxidierbaren Gase kontrollieren zu können. Die bis jetzt bekannten Sensoren sind teilweise nicht in der Lage, die im Abgas enthalten Komponenten gleichzeitig zu messen. Aus der DE-A-40 21 929 ist zwar ein Sensor bekannt, der eine solche Messung ermöglicht, jedoch weist er einen sehr komplexen Aufbau auf, und ist beim Einbau in Abgaskanäle schwer zu handhaben.

Der Erfindung liegt die Aufgabe zugrunde, einen Sensor aufzuzeigen, der einen kompakten Aufbau aufweist, auf einfache Weise in den Abgaskanal von Verbrennungsanlagen oder Verbrennungsmaschinen eingebaut werden kann, und zudem für die gleichzeitige Messung von mehreren Abgaskomponenten geeignet ist.

Diese Aufgabe wird erfindungsgemäß durch die Merkmale des Patentanspruches 1 gelöst.

Den Kern des erfindungsgemäßen Sensors bildet eine Meßvorrichtung mit einem Festelektrolytrohr, auf dessen Außenflächen zwei Meßelektroden angeordnet sind. Diese werden von dem zu überprüfenden Abgas beaufschlagt. Im Inneren des Festelektrolytrohres ist eine Referenzelektrode angeordnet, die von einem Referenzgas umgeben ist. Der gesamte Sensor wird von einem metallischen Gehäuse begrenzt, das als Zylinder ausgebildet ist. Dieses Gehäuse dient als Einbauhilfe und gleichzeitig als elektrisches Anschlußelement für die Referenzelektrode des Sensors. Durch die zylinderförmige Gestaltung des Gehäuses ist ein einfacher Einbau des Sensors in jeden Abgaskanal möglich. Die elektrischen Anschlußelemente der Meßelektroden werden isoliert durch Bohrungen im Festelektrolytrohr hindurch in das Innere des Festelektrolytrohres geleitet und von dort ebenfalls isoliert durch das Innere des Gehäuses nach außen geführt. Die Meßvorrichtung des Sensors sitzt auf einem Absatz innerhalb des Gehäuses und wird mit Hilfe von zusätzlichen zylindrischen Bauelementen im Inneren des Gehäuses gehalten. Nach dem Einsetzen der Meßvorrichtung ist das Gehäuse an seinem ersten Ende durch die Halteelemente verschlossen, die zur Befestigung der Meßvorrichtung im Gehäuse vorgesehen sind. Am zweiten Ende bleibt das Gehäuse offen. Hierdurch kann das zu überprüfende Abgas in das Innere des Gehäuses strömen und zu den Meßelektroden des Sensors gelangen. Weitere erfindungswesentliche Merkmale sind in den Unteransprüchen gekennzeichnet.

Die Erfindung wird nachfolgend anhand von Zeichnungen näher erläutert.

Es zeigen:
Fig. 1 einen erfindungsgemäßen Sensor,
Fig. 2 die Meßvorrichtung des Sensors,
Fig. 3 das Gehäuse des Sensors im Vertikalschnitt.

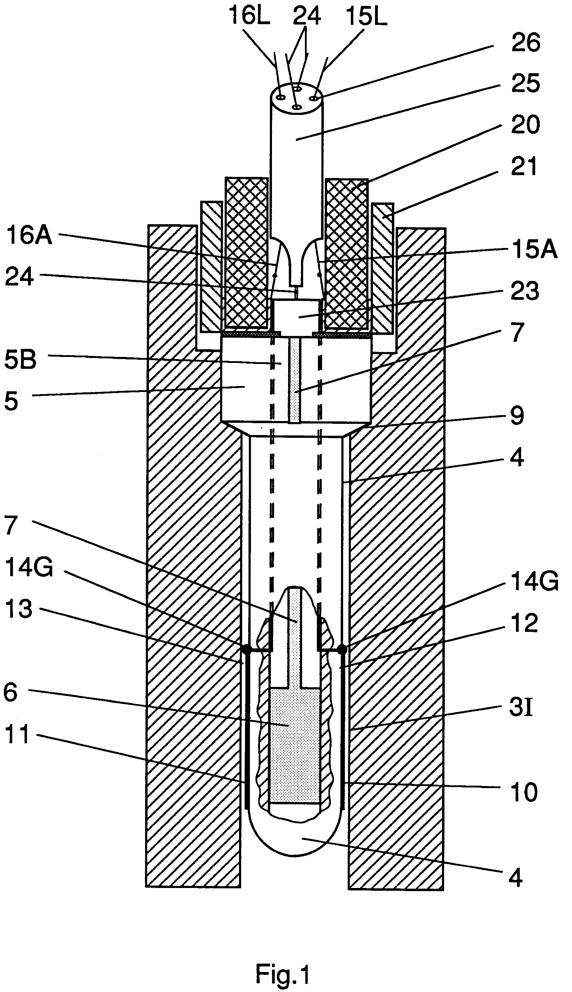

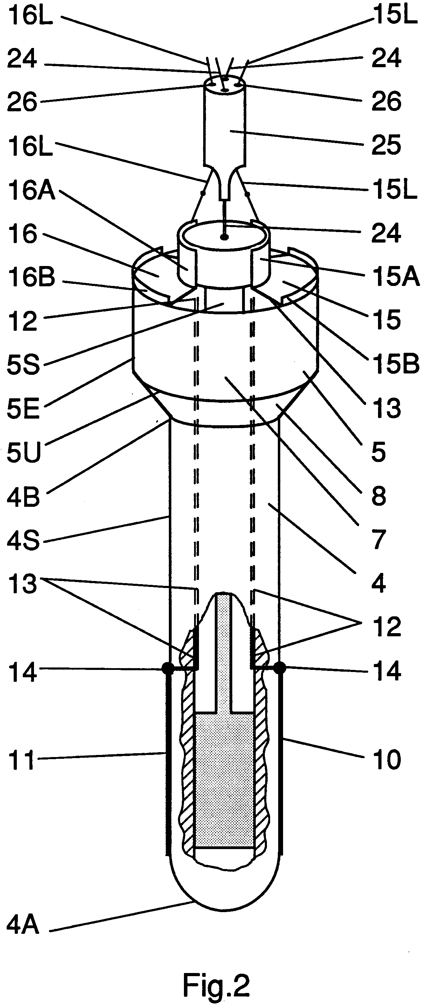

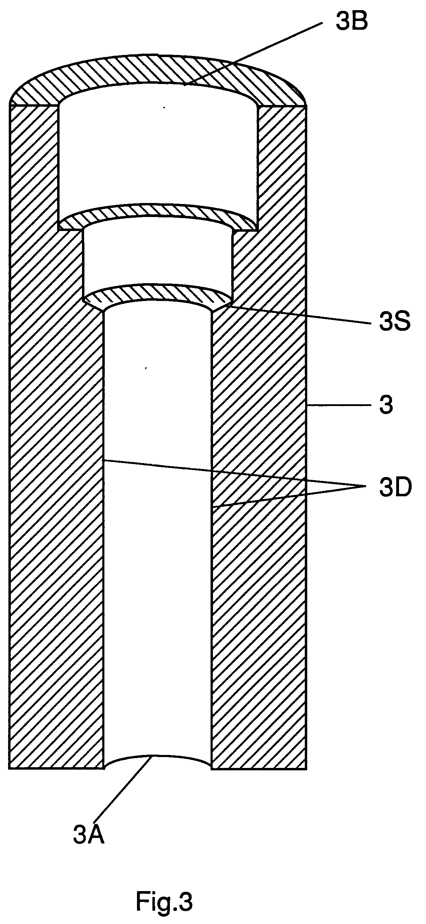

Der in Fig. 1 dargestellte Sensor 1 wird durch eine Meßvorrichtung 2 und ein Gehäuse 3 gebildet. Das Gehäuse 3 ist, wie Fig. 3 zeigt, zylinderförmig ausgebildet. Es wird aus einem korrosionsbeständigen und elektrisch gut leitenden Material hergestellt. Hierfür wird vorzugsweise ein Stahl verwendet, der gegenüber hohen Temperaturen beständig ist. Die Meßvorrichtung 2 des Sensors 1 weist ein Festelektrolytrohr 4 aus Keramik auf, das an seinem ersten Ende 4A geschlossen und an seinem zweiten Ende 4B offen ist. Das sauerstoffionenleitende Festelektrolytrohr 4 ist vorzugsweise aus Zirkoniumdioxid gefertigt. An seinem oberen offenen Ende 4B ist das Festelektrolytrohr 4 mit einer nach außen weisenden flanschförmigen Verdickung 5 bzw. Verstärkung versehen. Bei dem hier dargestellten Ausführungsbeispiel beträgt der Außendurchmesser des Festelektrolytrohres 4 etwa 7 bis 10mm, während die Verdickung 5 einen Außendurchmesser von 10 bis 14mm aufweist. Auf der Innenfläche des Festelektrolytrohres 4 ist eine Referenzelektrode 6 dauerhaft angeordnet. Sie wird durch eine Platinschicht mit definierten Abmessungen gebildet. Für den elektrischen Anschluß der Referenzelektrode 6 ist eine Leiterbahn 7 vorgesehen. Diese ist auf der Innenfläche des Festelektrolytrohres 4 bis auf die Oberfläche 5S der Verdickung 5 geführt. Von dort ist sie außen an der seitlichen Begrenzung 5E der Verdickung 5 entlang bis zu deren Unterseite 5U geführt. Im Übergangsbereich zwischen dem Festelektrolytrohr 4 und der Verdickung 5 ist ein Lackring 8 aufgetragen, auf den die Leiterbahn 7 geführt ist. An den Lackring 8 schließt sich, wie Fig. 1 zeigt, unmittelbar ein Metallring 9 an. Dieser ist aus einem gut elektrisch leitenden Material gefertigt. Auf der Außenfläche 4S des Festelektrolytrohres 5 sind in definiertem Abstand voneinander zwei Meßelektroden 10 und 11 angeordnet. Die Meßelektrode 10 ist oxidationskatalytisch aktiv und daher zur Ermittlung des Sauerstoffgehaltes im Abgas geeignet. Sie wird aus Platin gefertigt. Die Meßelektrode 11 ist oxidationskatalytisch inaktiv, jedoch elektrokatalytisch aktiv und wird deshalb zur Bestimmung des Wasserstoff- bzw. Kohlenmonoxidgehaltes verwendet. Sie wird aus einer Platin/Gold-Legierung hergestellt. An der Dreiphasengrenze Gas/Meßelektrode/Festelektrolyt kommt es zu einem Ladungsaustausch über die Grenzfläche hinweg. Zwischen der Meßelektrode 11 und der Referenzelektrode wird ein elektrisches Potential ausgebildet, da es zwischen dem Wasserstoff und den im Gitter des Festelektrolytrohres 4 enthaltenen Sauerstoffionen zu einer Reaktion kommt. Dabei werden Elektronen frei. Die Meßelektrode 10 ist katalytisch aktiv. Im Abgas enthaltener Wasserstoff und/oder Kohlenstoff wird an dieser Meßelektrode oxidiert. Der bei der katalytischen Verbrennung nicht verbrauchte Sauerstoff reagiert mit den Sauerstoffleerstellen im Gitter des Festelektrolyten, wobei ebenfalls ein elektrisches Potential erzeugt wird. Es kommt deshalb zur Ausbildung von zwei Potentialen zwischen den Meßelektroden 10 und 11 und der Referenzelektrode 6. Aus dem Potential zwischen der Meßelektrode 10 und der Referenzelektrode 6 wird der Sauerstoffgehalt im Abgas bestimmt. Aus dem Potential zwischen der Meßelektrode 11 und der Referenzelektrode 6 wird der Wasserstoff- und/oder Kohlenmonoxidgehalt im Abgas bestimmt, wobei für diese Berechnung die Information über den ermittelten Sauerstoffgehalt im Abgas verwendet wird. Die elektrische Verbindung der Meßelektroden 10 und 11 nach außen erfolgt zunächst über Leiterbahnen 12 und 13, die mit den Meßelektroden 10 und 11 dauerhaft verbunden sind. Die Leiterbahnen 12 und 13 sind auf der Innenfläche des Festelektrolytrohres 4 angeordnet. Das Festelektrolytrohr 4 ist mit Bohrungen 14 versehen, über welche die Leiterbahnen 12 aus dem Innenbereich 4I des Festelektrolytrohres 4 auf die Oberfläche 4S des Festelektrolyten 4 zu den Meßelektroden 10 und 11 geleitet sind. Die Bohrungen 14 werden nach der Verbindung der Leiterbahnen 12 und 13 mit den Meßelektroden 10 und 11 mit einem Glas 14G dauerhaft verschlossen. Die Leiterbahnen 12 und 13 sind auf der Innenfläche des Festelektrolytrohres 4 nach oben bis auf die Oberfläche 5S der Verdickung 5 geführt. Wie Fig. 2 zeigt, sind auf die Oberfläche 5S der Verdickung 5 Anschlußelemente 15 und 16 aufgesetzt, die als Halbringe ausgebildet sind. Die Abmessungen der Anschlußelemente 15 und 16 sind so gewählt, daß sie sich nicht berühren. Die Anschlußelemente 15 und 16 sind über stegförmige Bauelemente 15A und 16A mit elektrischen Leitungen 15L und 16L dauerhaft verbunden. Die Bauelemente 15 A und 16 A sind halbkreisförmig gebogen, senkrecht auf den inneren Rand der Anschlußelemente 15 und 16 aufgesetzt und dort dauerhaft befestigt. Die den Sensor 1 bildende Meßvorrichtung 2 wird in das in Fig. 3 dargestellte metallische Gehäuse 3 eingesetzt. Um eine optimale Überprüfung des Abgases zu ermöglichen, ist die Länge des Gehäuses 3 so gewählt, daß das geschlossene Ende 4A des Festelektrolytrohres 4 von dem Ende 3A des Gehäuses 3 geringfügig überragt wird. In dem Bereich, in dem das Festelektrolytrohr 4 angeordnet ist, weist das Gehäuse 3 einen Innendurchmesser auf, der geringfügig größer ist als der Außendurchmesser des Festelektrolytrohres 4. Hierdurch wird sichergestellt, daß das zu überwachende Abgas die beiden Meßelektroden 10 und 11 auf der Außenfläche 4S des Festelektrolytrohres 4 in ausreichender Menge umströmen kann. Um der Meßeinrichtung 2 einen festen Sitz im Gehäuse 3 zu verleihen und gleichzeitig sicherzustellen, daß ein guter elektrischer Kontakt zwischen dem Metallring 9 an der Unterseite 5U der Verdickung 5 und dem Gehäuse 3 erreicht wird, ist der Innendurchmesser 3D des Gehäuses 3 im Bereich der Verdickung 5 an den Außendurchmesser der Verdickung 5 angepaßt. Der Innendurchmesser 3D ist an der Unterseite der Verdickung 5 beginnenden konisch aufgeweitet, so daß eine Abschrägung 3S ausgebildet wird, auf die der Metallring 9 aufgesetzt ist. Wie anhand von Fig. 1 zu sehen ist, erhält die Meßvorrichtung 2 durch das Abstützen des Metallringes 9 auf der Abschrägung 3S einen optimalen Halt innerhalb des Gehäuses 3. Hierdurch wird außerdem eine sehr gute elektisch leitende Verbindung zwischen der Referenzelektrode 6 und dem Gehäuse 3 geschaffen. In Bereich der Verdickung 5 beginnend ist der Durchmesser 3D des Gehäuses 3 zum zweiten Ende 3B des Gehäuses 3 hin nochmals um einige mm aufgeweitet. Damit die auf der Oberfläche 5S des Flansches 5 angeordneten Anschlußelemente 15 und 16 in elektrisch leitender Verbindung mit den Leiterbahnen 12 und 13 bleiben, wird ein zylinderförmiges, isolierendes Bauelement 20 aus Keramik auf die Anschlußelemente 15 und 16 aufgesetzt. Die inneren und äußeren Abmessungen des Bauteils 20 sind an die Innen- und Außenabmessungen der Anschlußelemente 15 und 16 angepaßt. Das Bauteil 20 wird durch Randbegrenzungen 15B und 16B, die auf dem äußeren Rand der Anschlußelemente 15 und 16 angeordnet sind, zusätzlich in der gewünschten Position gehalten. Um ein Herausgleiten der Meßvorrichtung 2 aus dem Gehäuse 3 zu verhindern, ist ein weiteres zylinderförmiges, isolierendes Bauteil 21 aus Keramik vorgesehen. Die Abmessungen dieses Bauelementes 21 sind so gewählt, daß es sich unmittelbar an das Bauelement 20 anschließt, und mit seiner Außenfläche einen direkten Kontakt mit der Innenfläche 3I des Gehäuses 3 hat. In die Öffnung der Verdickung 5 ist ein zylinderförmiges Heizelement 23 eingesetzt. Die elektrischen Leitungen 15L und 16L werden zusammen mit den elektrischen Leitungen 24 des Heizelementes 23 über einen zylinderförmigen und elektrisch nicht leitenden Keramikkörper 25 nach außen geleitet. Der Keramikkörper 25 ist Bohrungen 26 versehen, durch welche die Leitungen 15L und 16L bzw. 24 hindurchgeführt werden. Die Längsachse des Keramikkörper 25 liegt auf der gleichen Geraden wie die Längsachse des Gehäuses 3.

## Patentansprüche

1. Sensor für die Bestimmung von Gasbestandteilen eines Abgases aus Verbrennungsanlagen und Verbrennungsmotoren, mit einer Meßvorrichtung (2), die mit einem Festelektrolytrohr (4) sowie einer Referenzelektrode (6) und zwei Meßelektroden (10 und 11) versehen ist, dadurch gekennzeichnet, daß die Meßvorrichtung (2) innerhalb eines metallischen Gehäuses (3) angeordnet ist, das als elektrisches Anschlußelement für die Referenzelektrode (6) dient, und daß die elektrische Verbindung der Meßelektroden (10 und 11) nach außen über Leiterbahnen (12 und 13), Anschlußelemente (15 und 16) und Leitungen (18 und 19) erfolgt, die durch den Innenbereich der Meßvorrichtung (2) und des Gehäuses (3) geführt sind.

2. Sensor nach Anspruch 1, dadurch gekennzeichnet, daß das Festelektrolytrohr (4) einseitig geschlossen und an seinem offenen Ende (4A) mit einer nach außen weisenden Verdickung (5) versehen ist, die flanschförmig ausgebildet ist.

3. Sensor nach einem der Ansprüche 1 oder 2, dadurch gekennzeichnet, daß der untere äußere Rand der Verdickung (5) auf eine Abschrägung (3S) auf der Innenfläche ( 3I) des Gehäuses (3) aufgesetzt ist, und daß am Übergang von dem Festelektrolytrohr (4) zu der Verdickung (5) ein Lackring (8) aufgetragen ist, der von einem metallischen Ring(9) umgeben ist, welcher mit dem Gehäuse (3) in elektrisch leitendem Kontakt steht.

4. Sensor nach einem der Ansprüche 1 bis 3, dadurch gekennzeichnet, daß die Referenzelektrode (6) mit einer Leiterbahn (7) verbunden ist, die über die Oberfläche (5S) der Verdickung 5 (5) bis auf den Lackring (8) geführt und mit dem Metallring (9) in elektrisch leitendem Kontakt steht.

5. Sensor nach einem der Ansprüche 1 bis 4, dadurch gekennzeichnet, daß jede Meßelektrode (10, 11) mit jeweils einer Leiterbahn (12, 13) verbunden ist, die durch je eine Bohrung (14) in dem Festelektrolytrohr (4) in das Innere desselben geführt und auf der Innenfläche des Festelektrolytrohres (4) bis auf die Oberfläche (5S) der Verdickung (5) geleitet ist, und daß auf die Oberfläche (5S) der Verdickung (5) elektrisch leitende Anschlußelemente (15 und 16) in Form von halbkreisförmigen Scheiben aufgesetzt und mit elektrischen Leitungen (16L und 16L) verbunden sind, welche isoliert nach außen geführt sind.

6. Sensor nach einem der Ansprüche 1 bis 5, dadurch gekennzeichnet, daß zur Verbesserung des elektrisch leitenden Kontaktes zwischen den Anschlußelementen (15 und 16) und den Leiterbahnen (12 und 13) ein zylinderförmiges Bauteil (20) aus einer nicht leitenden Keramik auf die Anschlußelemente (15 und 16) aufgesetzt ist.

7. Sensor nach einem der Ansprüche 1 bis 6, dadurch gekennzeichnet, daß zur Arretierung der Meßvorrichtung (2) zwischen den Innenflächen des Gehäuses (2) und der Außenfläche des zylinderförmigen Bauteils (20) ein weiteres zylinderförmiges Bauteil (21), ebenfalls aus einer nicht leitenden Keramik, angeordnet ist, das einen engen Kontakt mit dem Gehäuse (2) und dem zylinderförmigen Bauteil (20) aufweist.

8. Sensor nach einem der Ansprüche 1 bis 7, dadurch gekennzeichnet, daß die elektrischen Leitungen (15L und 16L) der Anschlußelemente (15 und 16) sowie die Leitungen (24) des Heizelementes (23) beschädigungsfrei durch Bohrungen (26) in einem zylindrischen, nicht leitenden Keramikkörper (25) aus dem Gehäuse (3) herausgeleitet sind.
